# EUROPÄISCHE PATENTSCHRIFT

(11) **EP 0 806 877 B1**
(45) Veröffentlichungstag und Bekanntmachung des Hinweises auf die Patenterteilung: **03.01.2001**
(21) Anmeldenummer: 97106868.9
(22) Anmeldetag: 25.04.1997
(51) Int. Cl.: H04N 11/16

(54) **Verfahren und Schaltungsanordnung zum speicheroptimierten Verarbeiten eines FBAS-Signals**
Method and device for the processing of a composite colour video signal with an optimized memory capacity
Procédé et dispositif pour le traitement d'un signal vidéo composite en couleurs avec une capacité de mémoire optimale

(30) Priorität: 08.05.1996 DE 19618351
(43) Veröffentlichungstag der Anmeldung: 12.11.1997
(73) Patentinhaber: DEUTSCHE THOMSON-BRANDT GMBH, 78048 Villingen-Schwenningen (DE)
(72) Erfinder: Hollmann, Thomas, 78052 Villingen-Schwenningen (DE); Maier, Michael, 78054 Villingen-Schwenningen (DE); Hirtz, Gangolf, 78078 Niedereschach (DE)
(74) Vertreter: Hartnack, Wolfgang, Dipl.-Ing.

(56) Entgegenhaltungen:
- EP-A- 0 695 090
- D'AMBROSIO E ET AL: "A 2.9 MEGABIT FIELD MEMORY ESPECIALLY SUITABLE FOR PALPLUS APPLICATIONS" 1.August 1994 , IEEE TRANSACTIONS ON CONSUMER ELECTRONICS, VOL. 40, NR. 3, PAGE(S) 718 - 726 XP000471241 * das ganze Dokument *
- M. SILVERBERG: "PALplus-Endgeräte", RADIO FERNSEHEN ELEKTRONIK, BERLIN, 01. Oktober 1994, Band 43, Nr. 10, Seiten 20, 22 - 23

## Beschreibung

Die Erfindung betrifft ein Verfahren und eine Schaltungsanordnung zum speicheroptimierten Verarbeiten eines mit herkömmlichen Farbfernsehübertragungssystemen kompatiblen FBAS-Signals, insbesondere eines PALplus-Signals.

### Stand der Technik

Zur kompatiblen Übertragung eines Fernsehbildes mit dem Bildseitenverhältnis 16:9 innerhalb eines 4:3-Systems erfolgt entsprechend der PALplus-Systemspezifikation eine Übertragung im Letterboxformat. Dazu wird das 576-zeilige Eingangsbild derart verarbeitet, daß die vertikal niederfrequenten Signalanteile innerhalb der zentralen 432 Zeilen des Bildes übertragen werden. Die vertikal hochfrequenten Signalanteile werden nun in den verbleibenden 144 Zeilen des Bildes übertragen. Diese Zusatzinformationen bilden die Schärfeinformation des Bildes und werden auch als Helpersignal bezeichnet. Das Helpersignal hat hierbei eine geringe Amplitude und wird im Schwarzbereich der Bildinformation eingelagert.

Für einen kompatiblen 4:3-Empfänger ist das Helpersignal unsichtbar, es wird nur der zentrale Hauptbereich des Bildes angezeigt. Jeweils 72 Zeilen oberhalb und unterhalb sind daher schwarz (sogenanntes Letterbox-Bild). Der PALplus-Empfänger ist dagegen in der Lage, auf der Basis der Haupt- und Helpersignale ein Bild zu rekonstruieren, das die volle Auflösung des ursprünglichen 576-zeiligen Bildes hat. Mit Hilfe von Vertikalfiltern wird dazu die hochfrequente Helperinformation und die niederfrequente Information des Hauptbildes addiert. Außerdem ist der PALplus-Empfänger, bei entsprechender senderseitiger Vorverarbeitung der Signale, in der Lage, Übersprechstörungen von den Luminanzsignalen in die Chrominanzsignale (Cross Colour) und umgekehrt (Cross Luminanz) zu unterdrücken.

Das Verfahren zur Rekonstruktion des Bildes ist abhängig von der Quelle, die das Bild liefert. Liegt ein Film vor, so hat dieser nur 25 Bilder pro Sekunde, so daß beide Teilbilder des Zeilensprungbildes aus der gleichen Bewegungsphase stammen. Dies wird im sogenannten Filmmode ausgenutzt. Die beiden Teilbilder werden wieder zu einem Vollbild zusammengesetzt und die Verarbeitung erfolgt im Vollbild zusammen mit den 144 Helperzeilen des Vollbildes. Für Bildmaterial, das mit einer elektronischen Kamera aufgenommen wurde, stammen beide Halbbilder nicht aus der gleichen Bewegungsphase. Hier erfolgt die Aufspaltung und die Rekonstruktion des Bildes auf der Basis eines Teilbildes incl. der 72 Helperzeilen des Teilbildes.

Das Verfahren, das laut PALplus-Systemspezifikation zur Unterdrückung der Übersprechstörungen angewendet werden kann, hängt ab von der im Bild vorliegenden Bewegung. Für Filmmaterial wird immer das ColourPlus-Verfahren angewendet, das empfängerseitig auf einer Addition der Chrominanz und der hochfrequenten Luminanz der beiden Halbbilder beruht. Für Material einer elektronischen Kamera kann das Motion Adaptive Colour Plus Verfahren zum Einsatz kommen. In ruhenden Bereichen oder in Bereichen mit wenig Bewegung kommt das gleiche Verfahren wie bei Filmmaterial zum Einsatz. Liegt viel Bewegung im Bild vor, führt die für ColourPlus notwendige Reduktion auf nur 25 Bewegungsphasen zu störendem Rucken im Bild. Deshalb erfolgt für diese Bereiche bereits senderseitig ein horizontaler Frequenzmultiplex von Luminanz und Chrominanz. Dies muß bei der empfängerseitigen Verarbeitung berücksichtigt werden. Dazu ist ein Bewegungsdetektor notwendig, der zwischen beiden Moden umschaltet.

EP-A-0 695 090 beschreibt einen PALplus-Decoder für 50Hz-Wiedergabe, bei dem mit Hilfe einer speziellen zyklischen Schreib-/Lese-Speichersteuerung über 6 Halbbilder für Hauptbildsignale und Helpersignale die Anzahl der Speicher bei Anwendung des Colour Plus Verfahrens reduziert werden kann. Die Helpersignale werden hierbei mit gegenüber dem Luminanzsignal reduzierter Abtastrate gespeichert.

Zur flimmerfreien Bildwiedergabe wird eine Darstellung des Bildes mit einer Bildfrequenz von 100 Hz im Zeilensprung durchgeführt. Das mit 50 Hz im Zeilensprung gelieferte Bild muß dazu auf eine Bildfrequenz von 100 Hz konvertiert werden.

Zu Vermeidung von Bewegungsartefakten geschieht dies im Cameramode durch eine wiederholte Berechnung der Teilbilder. Sind A und B die vom Sender gelieferten Bilder, so erfolgt die 100 Hz Darstellung mit der Abfolge AABB. Dadurch läßt sich das 50 Hz Großflächenflimmern unterdrücken. Das Kantenflackern mit 25 Hz läßt sich so aber nicht vermeiden. Im Filmmode wurden je zwei Teilbilder zum gleichen Zeitpunkt aufgenommen. In diesem Mode erfolgt die 100 Hz Darstellung in einer Sequenz ABAB ohne das Bewegungsartefakte auftreten. Sowohl das Großflächenflimmern als auch das Kantenflackern werden so unterdrückt. Für die ABAB Darstellung werden die jeweils benötigten Mainsignale aus den Speichern ausgelesen und eine vertikale Formatwandlung ausgeführt. Die Technik, PALplus-Halbbilder mit einer Wiederholrate von 100Hz wiederzugeben, ist bekannt aus Radio Fernsehen Elektronik 43 (1994), "PALplus-Endgeräte".

### Erfindung

Der Erfindung liegt die Aufgabe zugrunde, ein Verfahren zum speicheroptimierten Verarbeiten eines mit herkömmlichen Farbfernsehübertragungssystemen kompatiblen FBAS-Signals anzugeben. Diese Aufgabe wird durch das in Anspruch 1 angegebene Verfahren gelöst.

Der Erfindung liegt die weitere Aufgabe zugrunde, eine Schaltungsanordnung zur Anwendung des erfindungsgemäßen Verfahrens anzugeben. Diese Aufgabe wird durch die in Anspruch 11 angegebene Schaltungsanordnung gelöst.

Sowohl zur Rekonstruktion der vollen Vertikalauflösung, als auch zur bewegungsabhängigen Umsteuerung der Cross-Unterdrückung sind Bildspeicher notwendig. Da sie zu den teuren Komponenten des PALplus-Dekoders gehören, ist eine optimale Ausnutzung der Speicher angebracht.

Bekannte Konzepte zur PALplus-Decodierung und 100Hz-Konversion führen diese Prozesse getrennt durch und benötigen dabei in großer Menge Speicherplatz. Bei diesen Konzepten sind nicht nur die Kosten für den Speicher höher, sondern es erhöht sich auch der Aufwand für das PCB und den Test des Moduls.

Im Prinzip besteht daher das erfindungsgemäße Verfahren zum zum speicheroptimierten Verarbeiten eines mit herkömmlichen Farbfernsehübertragungssystemen kompatiblen FBAS-Signals, insbesondere eines PALplus-Signals, welches sich aus einem Hauptbereich und Zusatzinformationen zusammensetzt und in Halbbildern übertragen wird, wobei die Halbbilder zwischengespeichert und mit einem Vielfachen der Übertragungsfrequenz wiedergegeben werden, darin, daß ein Halbbild in verschiedenen Speicherbereichen abgelegt wird, wobei aufeinanderfolgende Zeilen eines Halbbildes nicht oder nur teilweise in aufeinanderfolgenden Adressbereichen abgespeichert werden.

Insbesondere bei der Filmmode-Verarbeitung ist es hierbei vorteilhaft von den Zeilen des Hauptbereiches eines Halbbildes einen ersten Teil in einem ersten Speicherbereich und einen zweiten Teil in einem zweiten Speicherbereich abzulegen.

Hierbei können die abgespeicherten Zeilen des Hauptbereiches von zwei aufeinanderfolgenden Halbbildern mehrmals hintereinander gleichzeitig ausgelesen werden, wobei während des Auslesens dieser Halbbilder bereits ein erstes später eingehendes Halbbild in zwei freien Addressbereichen der ersten und zweiten Speicherbereiche und ein weiteres später eingehendes Halbbild in zwei bereits durch eines der ersten Halbbilder benutzte Addressbereiche abgespeichert werden.

Vorzugsweise werden dabei die aufeinanderfolgenden Zeilen des Hauptbereiches abwechselnd in den ersten und zweiten Speicherbereich geschrieben. Es ist jedoch auch möglich, die eine Bildhälfte des Hauptbereiches in den ersten und die andere Bildhälfte in den zweiten Speicherbereich zu schreiben.

Vorzugsweise werden die Zeilen des Hauptbereiches zur Reduzierung von CrossColour- und CrossLuminanz-Störungen kombiniert, einer Vertikalfilterung zur Aufwärtskonversion zugeführt und es erfolgt eine Wiedergabe der Halbbilder mit einer Wiederholfrequenz von 100 Hz im ABAB-Mode.

Bei der Cameramode-Verarbeitung ist es besonders vorteilhaft, von aufeinanderfolgenden Halbbildern die Zeilen des Hauptbereiches in dem ersten Speicherbereich abzulegen und die Zusatzinformationen in getrennten Sektionen des zweiten Speicherbereiches abzulegen.

Vorzugsweise werden von einem Halbbild zunächst ein erster Teil der Zusatzinformationen, dann die Zeilen des Hauptbereiches und dann ein zweiter Teil der Zusatzinformationen in den Speicher eingelesen.

Hierbei können die Zusatzinformationen mit 6 Bit pro Abtastwert und mit einer horizontalen Unterabtastung um den Faktor 2 abgespeichert werden.

Vorzugsweise werden ferner die Zeilen des Hauptbereiches und der Zusatzinformationen einer Vertikalfilterung zur Aufwärtskonversion zugeführt und die Halbbilder mit einer Wiederholfrequenz von 100 Hz im AABB-Mode wiedergegeben.

Im Prinzip besteht die erfindungsgemäße Schaltungsanordnung zum speicheroptimierten Verarbeiten eines mit herkömmlichen Farbfernsehübertragungssystemen kompatiblen FBAS-Signals, insbesondere eines PALplus-Signals, welches sich aus einem Hauptbereich und Zusatzinformationen zusammensetzt und in Halbbildern übertragen wird, wobei die Halbbilder zwischengespeichert und mit einem Vielfachen der Übertragungsfrequenz wiedergegeben werden, darin, daß mehrere Speicher vorgesehen sind, in die ein Halbbild abgelegt wird, wobei eine Speichersteuerung dafür sorgt, daß aufeinanderfolgende Zeilen eines Halbbildes nicht oder nur teilweise in aufeinanderfolgenden Adressbereichen abgespeichert werden.

### Zeichnungen

Anhand der Zeichnungen werden Ausführungsbeispiele der Erfindung beschrieben. Diese zeigen in:
- Fig. 1: die empfängerseitige Verarbeitung der Signale nach dem ColourPlus-Verfahren,
- Fig. 2: den erfindungsgemäßen Aufbau eines PALplus-Dekoders zur Durchführung der erfindungsgemäßen Speichersteuerung,
- Fig. 3: die erfindungsgemäße Speichersteuerung für den Filmmode, wobei in a) das eingehende Bild und in b) die Abspeicherung der Daten dargestellt ist,
- Fig. 4: die erfindungsgemäße Speichersteuerung für den Cameramode, wobei in a) das eingehende Bild und in b) die Abspeicherung der Daten dargestellt ist.

### Ausführungs-Beispiele

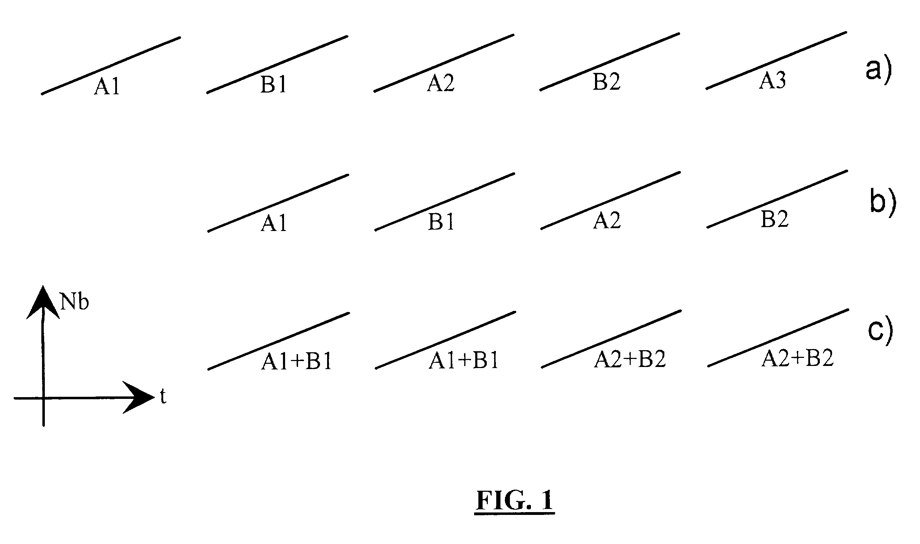

In Fig. 1 ist die empfängerseitige Verarbeitung im Filmmode dargestellt. Dieser Mode kommt zum Einsatz, wenn das vorliegende Material von einer Filmkamera aufgenommen wurde, und dementsprechend nur 25 Bewegungsphasen pro Sekunde aufweist. Zur Unterdrückung von Übersprechstörungen wird senderseitig nach der Filmabtastung mit 50Hz im Zeilensprung in der Chrominanz und in der hochfrequenten Luminanz jedes zweite Halbbild weggelassen und das verbleibende Halbbild je einmal wiederholt. Die nun folgende PAL-Modulation und - Demodulation führt im allgemeinen zu Übersprechstörungen (Cross-Colour und Cross-Luminanz), die empfängerseitig ausgeschlossen werden müssen.

Die in Fig. 1a dargestellte eingehende Sequenz der ersten Halbbilder A und zweiten Halbbilder B wird um die Dauer eines Halbbildes verzögert (Fig. 1b). Auf der Basis der Eingangssequenz und der verzögerten Sequenz erfolgt nun eine Mittelung der zu einem Vollbild gehörigen Halbbilder (Fig. 1c). Diese Mittelung wird für die Chrominanz und für die horizontal hochfrequente Luminanz ausgeführt. Aufgrund der Eigenschaften des Farbträgers führt dies dazu, daß die jeweiligen Übersprechstörungen eliminiert werden. Eine anschließende Halbbildwiederholung liefert eine übersprechfreie Sequenz mit einer Bildfrequenz von 50Hz. Diese Verarbeitung (Colour Plus) führt zu einer Übertragung von nur 25 Bewegungsphasen für die Chrominanz und die hochfrequente Luminanz, was bei Filmmaterial keine Einschränkung darstellt.

Die Berechnung des Letterboxbildes erfolgt senderseitig auf Vollbildbasis. Dazu werden die beiden Halbbilder wieder zu einem Vollbild zusammengefaßt. Eine anschließende Vertikalfilterung spaltet das Signal in einen niederfrequenten Anteil (16:9-Mainbild) und einen hochfrequenten Anteil (Helpersignal) auf. Die Helperzeilen werden nun in die oberen und unteren Letterboxbalken einsortiert. In den oberen Letterboxbalken (Helper Top) beider Halbbilder befinden sich die Helperzeilen für die obere Hälfte des Mainbildes, während die für die untere Bildhälfte in den unteren Randzeilen (Helper Bottom) der beiden Halbbilder zu finden sind.

Im Empfänger müssen zur Rekonstruktion von 576 Zeilen je zwei zusammengehörige Halbbilder wieder zu einem Vollbild zusammengesetzt werden. Mit Hilfe von Vertikalfiltern und den Mainzeilen von zwei zusammengehörigen Halbbildern kann ein 576 zeiliges 16:9- Bild berechnet werden. Die vom Sender gelieferten Helperzeilen sind im Filmmode energiearm. Deren Nutzung zur Formatkonversion führt in den meisten Bildern nicht zu einer deutlichen Qualitätsverbesserung.

Das ColourPlus-Verfahren läßt sich auf Sequenzen, die mit einer elektronischen Kamera (50Hz, 2:1) produziert wurden, nur bedingt anwenden. Die verfahrensbedingte Reduktion auf 25 Bewegungsphasen pro Sekunde in der Chrominanz und in der horizontal hochfrequenten Luminanz führt bei bewegten Bildinhalten zu störendem Rucken. In der PALplus Systemspezifikation ist in diesem sogenannten Cameramode deshalb eine bewegungsabhängige Variante des ColourPlus-Verfahrens vorgesehen. Allerdings muß hierfür zusätzlicher Speicherplatz zur Verfügung gestellt werden.

Die Aufspaltung in Main- und Helperbereich erfolgt in diesem Mode auf Teilbildbasis. Die Helperzeilen für den oberen Bereich des Mainbildes des ersten Halbbildes befinden sich im den oberen schwarzen Streifen des ersten Halbbildes, die für die untere Bildhälfte im unteren schwarzen Streifen. Die Helperzeilen für das zweite Teilbild sind dementsprechend in den Helperbereichen des zweiten Teilbildes zu finden.

Das Helpersignal, welches die vertikalen Höheninformationen überträgt, darf für den kompatiblen Empfänger nicht sichtbar sein und muß totzdem rauschunempfindlich sein. Deshalb wird es mehreren Verarbeitungsschritten unterzogen. Nachdem das Helpersignal auf der Senderseite vom Bildsignal abgetrennt worden ist, wird es einer Companding-Operation unterzogen, die zum einen die Amplitude des Helpers begrenzt, und zum anderen kleine Helperamplituden mehr verstärkt als große, so daß es rauschunempfindlicher wird. Eine anschließende Horizontalfilterung senkt hochfrequente Helperwerte leicht ab und führt eine Bandbegrenzung auf etwa 2.5MHz/-6dB durch. Empfangsseitig müssen diese Schritte wieder rückgängig gemacht werden. Ein Horizontalfilter hebt hochfrequente Helperwerte an (Inverse Spectrum Shaping) und eine Decompanding-Kennlinie gleicht die senderseitige Compandierung des Helpers aus.

Da das Helpersignal im Filmmode nur unwesentlich zur Verbesserung der Bildqualität beiträgt, es aber anderseits Speicherplatz benötigt, kann auf die Verwendung im PALplus-Decoder verzichtet werden. Im Cameramode dagegen sollte das Helpersignal auf jeden Fall zum Einsatz kommen. Aus Speicherplatzgründen kann die ColourPlus-Verarbeitung auf den Filmmode beschränkt werden, so daß die bewegungsadaptive Variante im Cameramode nicht eingesetzt wird. Zur Trennung von Luminanz und Chrominanz kann dann im Cameramode ein Kammfilter oder ein horizontales Filter eingesetzt werden.

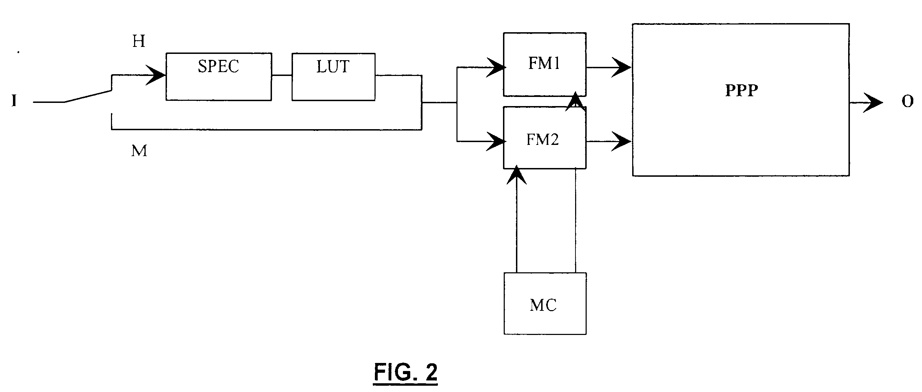

Figur 2 zeigt ein erfindungsgemäßes Gesamtsystem zur PALplus-Decodierung. Das eingehende Bild I soll als bereits digitalisiert angenommen werden. Die Luminanz und das Helpersignal sind mit 13.5 MHz abgetastet worden. Die Chrominanz ist bereits demoduliert und mit 3.375MHz abgetastet (4:1:1-System) worden. Das Helpersignal H wird nun der Horizontalfilterung zur Spektrenformung SPEC unterzogen, anschließend der Look-up-Tabelle LUT zwecks Decompanding zugeführt und dann gespeichert. Das Mainsignal M wird an diesen Operationen vorbeigeführt und ebenfalls gespeichert. Das PALplus-Processing PPP führt dann folgende Operationen aus:
- im Filmmode:: ColourPlus zur Reduktion der Übersprechstörungen;
vertikale Formatkonversion im Vollbild ohne Nutzung des Helpersignals;
- im Cameramode:: vertikale Formatkonversion im Teilbild unter Nutzung des Helpersignals

Es kommen zwei Speicher FM1, FM2 zum Einsatz, in die die Halbbilder jeweils abgelegt werden, bevor sie der PALplus-Verarbeitung zugeführt werden. Eine Speichersteuerung MC sorgt hierbei dafür, daß aufeinanderfolgende Zeilen eines Halbbildes nicht oder nur teilweise in aufeinanderfolgenden Adressbereichen abgespeichert werden.

Die Speichersteuerung MC wird im folgenden beispielhaft für Speicherbausteine mit der Organisation 6144Blocks*40Worte*12Bit beschrieben, wobei jeder Block einzeln adressierbar ist und der Speicher einen Schreib- und einen Leseport (Dual Port Memory) aufweist.

Es sollen die folgenden Abkürzungen gelten:
- A:: erstes Halbbild
- B:: zweites Halbbild
- HT:: oberer Helper (Helper Top)
- HB:: unterer Helper (Helper Bottom)
- M:: zentraler Bildbereich (Main)
- A' (A''):: erster (zweiter) Teil des ersten Teilbildes
- ______: Speicher schreiben
- ...........: Speicher lesen

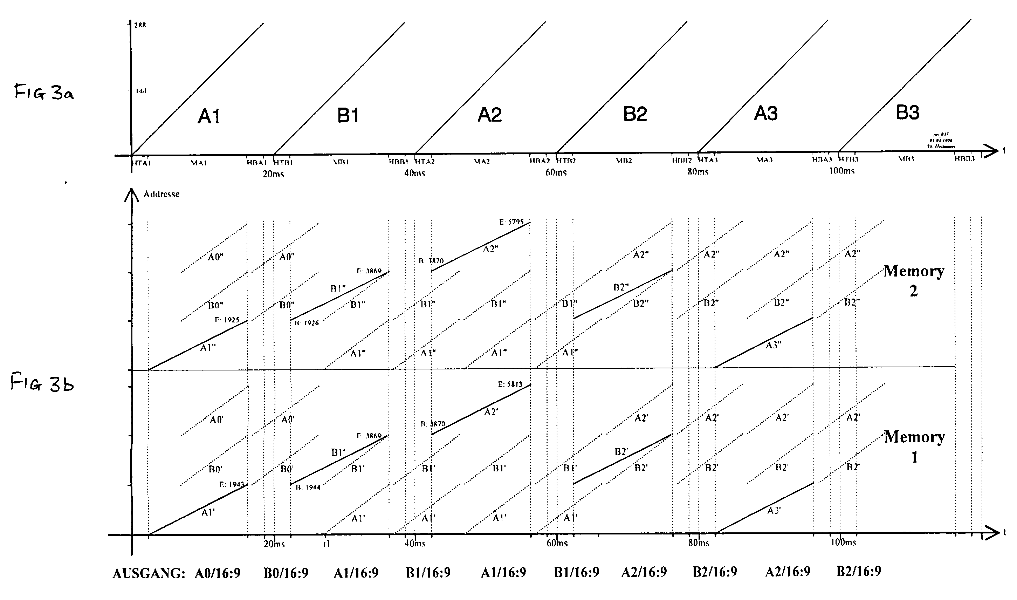

Figur 3 zeigt die Speichersteuerung für den Filmmode. In Fig. 3a) ist das eingehende Bild dargestellt. Dementsprechend setzt sich das Teilbild A1 aus den 36 Zeilen des oberen Helpers HTA1, dem Mainbereich MA1 mit 216 Zeilen, sowie den unteren 36 Helperzeilen HBA1 zusammen. In Fig. 3b) ist die Abspeicherung dieser Daten dargestellt. Abgespeichert werden nur die Mainzeilen, da im Filmmode das Helpersignal nicht verwendet wird. Die Mainzeilen werden abwechselnd in Speicher M1 und M2 geschrieben. Alternativ kann auch die eine Bildhälfte in ein Memory und die andere in das andere Memory geschrieben werden.

Zum Zeitpunkt t1 beginnt das sequentielle Auslesen der gespeicherten Werte. Für die Filmodeverarbeitung müssen die Mainzeilen von zwei aufeinanderfolgenden Halbbildern (z. B. A1 und B1) gleichzeitig ausgelesen werden. Da zwei zusammengehörige Zeilen nie im gleichen Speicherbaustein abgespeichert werden, können sie mit 27 MHz parallel ausgelesen werden. Für die Mainzeilen kann dann die Colour-Plus-Verarbeitung durchgeführt und das Resultat den Vertikalfiltern zur Aufwärtskonversion zur Verfügung gestellt werden. Durch den verzögerten Auslesebeginn stehen der Verarbeitung die benötigten Zeilen der beiden Halbbilder für eine Halbbilddauer von 10 ms zur Verfügung.

Wegen der Vollbildverarbeitung im Filmmode sind auch für die Berechnung des zweiten ausgehenden Halbbildes (B1/16:9) beide Halbbilder (A1 und B1) notwendig und müssen hierfür noch einmal ausgelesen werden. Während des Auslesens dieser Halbbilder muß aber bereits das soeben eingehende Halbbild A2 abgespeichert werden. Damit nun nicht die noch benötigten Halbbild A1 und B1 überschrieben werden, muß ein noch freier Speicherbereich genutzt werden. Die Zeilen von A2 werden wiederum abwechselnd in Speicher M1 und M2 geschrieben. Halbbild B2 kann immer in den gleichen Speicherbereich geschrieben werden, da keine Konflikte auftreten. Zur Berechnung von A2/16:9 können nun A2 und B2 ausgelesen und verrechnet werden. Zur Abspeicherung von A3 wird, wie dargestellt, der gleiche Bereich wie A1 genutzt werden.

Es ergibt sich somit eine zyklische Schreib/Lesesteuerung über 4 (Eingangs-) Halbbilder. Durch die optimierte Abspeicherung und Steuerung der Speicher reichen für diesen Mode damit zwei Speicherbausteine aus.

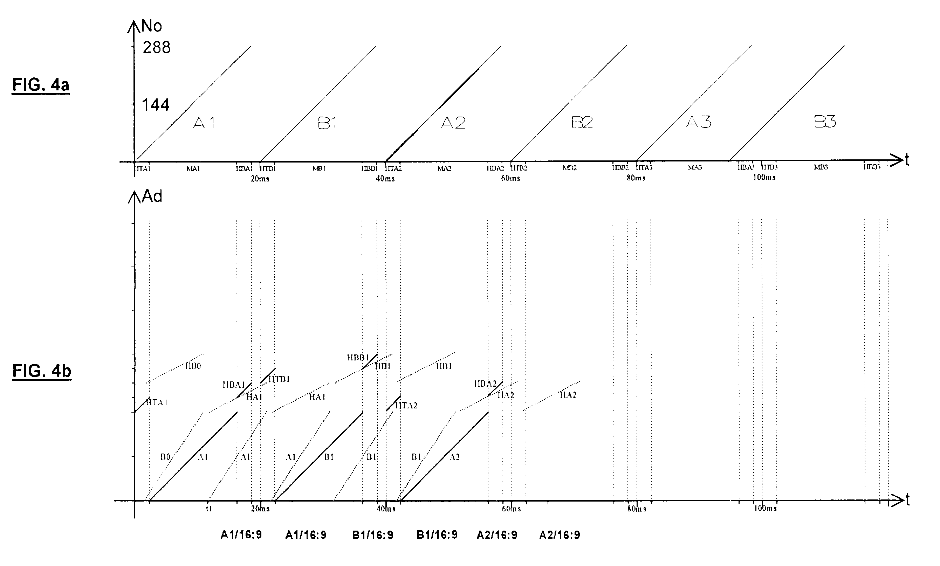

Figur 4 zeigt die Speichersteuerung für den Cameramode. Der Speicherbereich für den Mainbereich A und den Mainbereich B ist identisch. Für die Helpersignale von A und B werden getrennte Bereiche verwendet. Das Auslesen beginnt wiederum zum Zeitpunkt t1. Für das Teilbild A1/16:9 wird, da die Aufspaltung nur im Teilbild ausgeführt wurde, auch nur der Helper dieses Teilbildes benötigt. A1 wird für die 100 Hz Darstellung zweifach berechnet. Die Zeilen von B1 werden hier noch nicht benötigt, da die ColourPlus-Verarbeitung nicht ausgeführt wird. B1 kann in den gleichen Bereich wie A1 geschrieben werden. Dazu werden bereits nicht mehr benötigte Zeilen von A1 überschrieben. Das Helpersignal von B1 wird in seinen getrennten Bereich geschrieben. Nach zweimaliger Berechnung von A1 kann zweimal B1 berechnet werden. Main- und Helperzeilen von B1 stehen rechtzeitig zur Verfügung. Mit dem Abspeichern von A2 beginnt der Zyklus von neuem. Wird das Helpersignal mit nur 6 Bit pro Abtastwert und mit einer horizontalen Unterabtastung um den Faktor 2 abgespeichert, so ist es möglich, Helper- und Mainsignale in nur einem Speicherbaustein abzulegen und gleichzeitig eine vertikale Formatkonversion mit Helper und eine 100 Hz Wiedergabe durchzuführen.

Die Erfindung kann z. B. für PALplus-Fernsehgeräte, aber auch für Geräte zum Empfang von Farbfernsehsignalen gemäß einer Weiterentwicklung anderer Farbfernsehsysteme, wie z.B. NTSC oder SECAM, genutzt werden.

## Patentansprüche

1. Verfahren zum speicheroptimierten Verarbeiten eines mit herkömmlichen Farbfernsehübertragungssystemen kompatiblen FBAS-Signals, welches sich aus einem Hauptbereich (MA1) und Zusatzinformationen (HTA1, HBA1, HTB1, HBB1) zusammensetzt und in Halbbildern (A1, B1) übertragen wird, wobei eine zyklische Schreib-/Lese-Speichersteuerung über mehrere Halbbilder durchgeführt wird, die die Halbbilder zwischenspeichert und mit einem Vielfachen der Übertragungsfrequenz wiedergibt, **dadurch gekennzeichnet**, daß in einem ersten Mode nur die Zeilen des Hauptbereiches der Halbbilder abgespeichert werden und von den Zeilen des Hauptbereiches eines Halbbildes ein erster Teil (A1') in einem ersten Speicherbereich (M1) und ein zweiter Teil (A1'') in einem zweiten Speicherbereiches (M2) abgelegt wird, wobei zyklisch die folgenden Schritte durchlaufen werden:
- Speichern von drei aufeinanderfolgenden Halbbildern in aufeinanderfolgenden Adressbereichen der ersten und zweiten Speicherbereiche;
- mehrmaliges gleichzeitiges Auslesen der ersten beiden Halbbilder (A1, B1), wobei das Auslesen bereits während des Einlesens des zweiten Halbbildes (B1) erfolgt;
- Speichern eines später eingehenden vierten Halbbildes (B2) in Adressbereiche, die vorher von dem ersten oder zweiten Halbbild (A1, B1) genutzt worden sind, wobei das Speichern noch während des letzten Auslesevorgangs der abgespeicherten ersten beiden Halbbilder erfolgen kann;
oder in einem zweiten Mode von aufeinanderfolgenden Halbbildern (A1, B1) die Zeilen des Hauptbereiches in dem ersten Speicherbereich (M1) abgelegt werden und die Zusatzinformationen in getrennten Sektionen des zweiten Speicherbereiches (M2) abgelegt werden, und der Hauptbereich und die Zusatzinformationen eines Halbbildes (A1) mehrmals ausgegeben werden, wobei während des letzten Auslesevorgang bereits das darauffolgende Halbbild (B1) abgespeichert wird.

2. Verfahren nach Anspruch 1, **dadurch gekennzeichnet**, daß in dem ersten Mode die aufeinanderfolgenden Zeilen des Hauptbereiches abwechselnd in den ersten (M1) und zweiten (M2) Speicherbereich geschrieben werden.

3. Verfahren nach Anspruch 1, **dadurch gekennzeichnet**, daß in dem ersten Mode die eine Bildhälfte des Hauptbereiches in den ersten (M1) und die andere Bildhälfte in den zweiten (M2) Speicherbereich geschrieben wird.

4. Verfahren nach einem der vorhergehenden Ansprüche, **dadurch gekennzeichnet**, daß in dem ersten Mode die Zeilen des Hauptbereiches zur Reduzierung von CrossColour- und CrossLuminanz-Störungen kombiniert werden, einer Vertikalfilterung zur Aufwärtskonversion zugeführt werden und die Halbbilder mit einer Wiederholfrequenz von 100 Hz im ABAB-Mode wiedergegeben werden.

5. Verfahren nach Anspruch 1, **dadurch gekennzeichnet**, daß in dem zweiten Mode von einem Halbbild zunächst ein erster Teil der Zusatzinformationen (HTA1), dann die Zeilen des Hauptbereiches und dann ein zweiter Teil der Zusatzinformationen (HBA1) in den Speicher eingelesen werden.

6. Verfahren nach einem der Ansprüche 1 oder 5, **dadurch gekennzeichnet**, daß in dem zweiten Mode die Zusatzinformationen (HTA1, HBA1) mit 6 Bit pro Abtastwert und mit einer horizontalen Unterabtastung um den Faktor 2 abgespeichert werden.

7. Verfahren nach einem der Ansprüche 1, 5 oder 6, **dadurch gekennzeichnet**, daß in dem zweiten Mode die Zeilen des Hauptbereiches und der Zusatzinformationen einer Vertikalfilterung zur Aufwärtskonversion zugeführt werden und die Halbbilder mit einer Wiederholfrequenz von 100 Hz im AABB-Mode wiedergegeben werden.

8. Schaltungsanordnung, die Mittel zur Durchführung aller Schritte des Verfahrens nach Anspruch 1 beinhaltet.

## Claims

1. Method for the memory-optimized processing of a CVBS signal which is compatible with conventional colour television transmission systems, which is composed of a main area (MA1) and additional information items (HTA1, HBA1, HTB1, HBB1) and is transmitted in fields (A1, B1), wherein a cyclical write-/readmemory control through several fields is carried out which buffers the fields and reproduces them with a multiple of the transmission frequency,
characterized in that
within a first mode only the lines of the main area of the fields are stored and a first group (A1') of the lines of the main area is stored in a first memory area (M1) and a second group (A1") of the lines of the main area of a field is stored in a second memory area (M2) wherein the following steps are performed cyclically:
- storing three successive fields in successive address areas of the first and the second memory areas,
- multiple simultaneous reading the first two fields (A1, B1) wherein the reading occurs already during the writing of the second field (B1),
- storing a fourth field (B2) arriving later in address areas which have been used before by the first or the second field (A1, B1) wherein said storing is enabled to occur already during the last reading-out-process off the stored first two fields,
or the lines of the main area are stored in the first memory area (M1) in a second mode of successive fields (A1, B1) and the additional information items are stored within separate sections of the second memory area (M2) and the main area and the additional information items of one field (A1) are output several times wherein the succeeding field (B1) is stored already during the last reading process.

2. Method according to claim 1, characterized in that in the first mode the successive lines of the main area are written alternately to the first (M1) and second (M2) memory area.

3. Method according to claim 1, characterized in that in the first mode one picture half of the main area is written to the first memory area (M1) and the other picture half is written to the second memory area (M2).

4. Method according to one of the preceding claims, characterized in that in the first mode the lines of the main area are combined for the purpose of reducing cross-colour interference and cross-luminance interference, are fed to a vertical filtering arrangement for the purpose of up-conversion and the fields are reproduced at a repetition rate of 100 Hz in the ABAB mode.

5. Method according to claim 1, characterized in that, in the second mode of a field, first of all a first group of additional information items (HTA1), then the lines of the main area and then a second group of additional information items (HBA1) are read into the memory.

6. Method according to one of claims 1 or 5, characterized in that in the second mode the additional information items (HTA1, HBA1) are stored with 6 bits per sample and with an horizontal subsampling by a factor of 2.

7. Method according to one of claims 1, 5 or 6, characterized in that in the second mode the lines of the main area and of the additional information items are fed to a vertical filtering arrangement for the purpose of up-conversion and the fields are reproduced at a repetition rate of 100 Hz in the AABB mode.

8. Circuit arrangement including means for implementing all steps of the method according to claim 1.

## Revendications

1. Procédé pour le traitement d'un signal vidéo composite en couleurs compatible avec les systèmes d'émission de télévision en couleurs traditionnels, avec une capacité de mémoire optimale, signal qui se compose d'une composante principale (MA1) et de composantes additionnelles (HTA1, HBA1, HTB1, HBB1) et est transmis dans des trames (A1, B1), où une commande de mémoire de lecture/écriture cyclique sur plusieurs trames est effectuée qui mémorise temporairement les trames et les restitue avec un multiplex de la fréquence de transmission, **caractérisé en ce que**
dans un premier mode, seules les lignes de la composante principale des trames sont mémorisées et parmi les lignes de la composante principale d'une trame une première partie (A1') est stockée dans une première zone mémoire (M1) et une seconde partie (A1") dans une seconde zone mémoire (M2) ; les étapes suivantes étant exécutées cycliquement:
- mémorisation de trois trames consécutives dans des zones d'adresse consécutives des premières et secondes zones de mémoire ;
- lecture répétée simultanée des deux premières trames (A1, B1), la lecture ayant lieu déjà pendant la mémorisation de la seconde trame (B1) ;
- mémorisation d'une quatrième trame entrant ultérieurement (B2) dans des zones d'adresse ayant été utilisées précédemment par la première ou la seconde trame (A1, B1), la mémorisation pouvant avoir lieu pendant le dernier processus d'extraction des deux premières trames mémorisées ;
ou dans un second mode, les lignes de la composante principale de trames consécutives (A1, B1) sont stockées dans la première zone mémoire (M1) et les composantes additionnelles des trames consécutives (A1, B1) sont stockées dans des sections séparées de la seconde zone mémoire (M2), et la composante principale et les composantes additionnelles d'une trame (A1) sont extraites plusieurs fois, la trame suivante (B1) étant déjà mémorisée pendant le dernier processus de lecture.

2. Procédé selon la revendication 1, **caractérisé en ce que**, dans le premier mode, les lignes consécutives de la composante principale sont écrites alternativement dans la première zone mémoire (M1) et la deuxième zone mémoire (M2).

3. Procédé selon la revendication 1, **caractérisé en ce que** dans le premier mode, la première trame de la composante principale est mémorisée dans la première zone mémoire (M1) et la seconde trame est mémorisée dans la deuxième zone mémoire (M2)

4. Procédé selon une des revendications précédentes, **caractérisé en ce que** dans le premier mode les lignes de la composante principale sont combinées pour réduire les perturbations diaphotiques (luminance-chrominance et chrominance-luminance), sont menées à un filtrage vertical pour la conversion vers le haut et les trames sont restituées à une fréquence de répétition de 100 Hz en mode ABAB.

5. Procédé selon la revendication 1, **caractérisé en ce que** dans le deuxième mode une première partie des composantes additionnelles (HTA1) d'une trame est d'abord mise en mémoire, puis les lignes de la composante principale, puis une seconde partie des composantes additionnelles (HBA1).

6. Procédé selon une des revendications 1 ou 5, **caractérisé en ce que** dans le deuxième mode, les composantes additionnelles (HTA1, HBA1) sont mémorisées avec 6 bits par valeur d'échantillonnage et avec un sous-échantillonnage horizontal autour du facteur 2.

7. Procédé selon une des revendications 1, 5 ou 6, **caractérisé en ce que** dans le deuxième mode, les lignes de la composante principale et des composantes additionnelles sont menées à un filtrage vertical pour la conversion vers le haut et les trames sont restituées avec une fréquence de répétition de 100 Hz en mode AABB.

8. Dispositif qui comprend des moyens pour la réalisation de toutes les étapes du procédé selon la revendication 1.
